# EUROPEAN PATENT SPECIFICATION

(11) **EP 4 407 839 B1**
(45) Date of publication and mention of the grant of the patent: **12.08.2026**
(21) Application number: 22958363.8
(22) Date of filing: 13.09.2022
(51) Int. Cl.: H02K 1/27, H02K 1/2795, H02K 29/03

(54) **ROTOR FOR DISC MOTOR, DISC MOTOR, AND ELECTRIC DEVICE**
ROTOR FÜR SCHEIBENMOTOR, SCHEIBENMOTOR UND ELEKTRISCHE VORRICHTUNG
ROTOR POUR MOTEUR À DISQUE, MOTEUR À DISQUE ET DISPOSITIF ÉLECTRIQUE

(43) Date of publication of application: 31.07.2024
(73) Proprietor: Contemporary Amperex Intelligence Technology (Shanghai) Limited, Shanghai 201306 (CN)
(72) Inventor: WU, Kai, Shanghai 200120 (CN)
(74) Representative: Gong, Jinping
(86) International application number: PCT/CN2022/118533
(87) International publication number: WO 2024/055169

(56) References cited:
- EP-A2- 1 734 645
- EP-A2- 1 816 731
- EP-B1- 2 582 016
- CN-A- 1 897 419
- CN-A- 102 931 808
- CN-A- 103 036 376
- CN-A- 111 541 325
- CN-A- 111 541 325
- DE-A1- 102013 206 034
- JP-B2- 4 816 679

## Description

### FIELD

The present disclosure relates to the field of motors, and more specifically, to a rotor for a disc motor as specified in claim 1, a disc motor as specified in claim 9, and an electric device as specified in claim 10.

### BACKGROUND

A disc motor, also called an axial magnetic field motor, has a magnetic field direction parallel to a rotation axis of a rotor. The magnetic field goes in an axial direction, which not only has a large magnetic energy density, but also a large space for energy exchange. Therefore, a torque density of a motor is greatly improved compared to a radial magnetic field. The disc motor has gained more and more attention due to its advantages, such as compact structure, high efficiency, large power density, etc. Disc motors are particularly suitable for applications requiring high torque density and compact space, such as electric vehicles, renewable energy systems, flywheel energy storage systems, and industrial devices.

In the development of disc motors, how to improve the torque density and efficiency of motors is an important research direction in motor technology.

EP 2 582 016 B1 discloses a motor including a first rotor and a second rotor.

EP 1 734 645 A2 discloses an axial air gap-type electric motor.

JP 4 816679 B2 discloses a motor structure of an axial gap motor.

DE 10 2013 206034 A1 discloses a transverse flux machine with improved rotor.

CN 102 931 808 A discloses an interaxial permanent magnet coupling mechanism.

### SUMMARY

The present disclosure provides a rotor for a disc motor, a disc motor, and an electric device, which can improve the torque density and efficiency of the motor. The invention is defined by the appended claims.

In a first aspect, the embodiments of the present disclosure provide a rotor for a disc motor. The rotor is divided into a plurality of magnetic pole units in a circumferential direction of the rotor, and each of the plurality of magnetic pole units includes at least two magnetic bodies. In the circumferential direction of the rotor, the magnetic bodies of each of the plurality of magnetic pole units have a same magnetization direction, and the magnetic bodies of any two adjacent magnetic pole units have opposite magnetization directions.

In the above solution, two adjacent magnetic pole units have opposite magnetization directions. Each of the plurality of magnetic pole units includes at least two magnetic bodies having a same magnetization direction. In this way, the layer number of the magnetic bodies in each magnetic pole unit is increased, and the number of magnetic barriers of the magnetic pole units is increased, which is beneficial to reducing an armature reaction and iron loss of the stator, and at the same time improving a magnetization effect of the rotor, ultimately improving the torque density and efficiency of the motor.

In some embodiments, the rotor further includes a plurality of magnetic conductors arranged at intervals in the circumferential direction, and any two adjacent magnetic conductors have one of the plurality of magnetic conductors embedded between the two adjacent magnetic conductors. The magnetic conductors have the effect of conducting the magnetic field, enhancing the magnetic field strength of the magnetic pole units.

In some embodiments, the plurality of magnetic pole units are evenly distributed in the circumferential direction of the rotor, which enhances uniformity of magnetic field strength distribution of a rotor.

According to the first aspect, each of the plurality of magnetic pole units includes at least one first magnetic body group each including two first magnetic bodies. The two first magnetic bodies are symmetrically distributed along a center line of the magnetic pole unit.

In the above solution, the number of the first magnetic bodies is an even number, and the two first magnetic bodies of each of the first magnetic body group are symmetrically distributed to ensure uniform distribution of the magnetic field strength of the magnetic pole units and to improve the electromagnetic performance of the disc motor.

In some embodiments, each of the plurality of the magnetic pole units further include one second magnetic body disposed on the center line.

The above solution further increases the number of the magnetic bodies in the magnetic pole units. By increasing the number of the magnetic bodies in the magnetic pole units, the number of magnetic barriers in the magnetic pole units is increased, which is more beneficial to reducing the armature reaction and iron loss of the stator, improving the magnetization effect, and ultimately improving the torque density and efficiency of the motor. The second magnetic body is disposed on the center line, which may improve the uniformity of the magnetic field strength distribution of the magnetic pole units.

In some embodiments, the first magnetic body and the second magnetic body have different sizes in the magnetization direction, which is beneficial to improving the air gap magnetic density harmonics, allowing the motor to achieve optimal electromagnetic performance, and at the same time, by increasing the size of the magnetic body, a risk of demagnetization of the magnetic body may be reduced.

According to the first aspect, each of the plurality of magnetic pole units includes a plurality of first magnetic body groups. In one of the plurality of magnetic pole units, two first magnetic bodies of each first magnetic body group are angled to each other, and an angle formed between two first magnetic bodies of each of the plurality of first magnetic body groups is different from an angle formed between two first magnetic bodies of another one of the plurality of first magnetic body groups.

In the above solution, the two first magnetic bodies of each first magnetic body group are angled to each other. The angle formed between the two first magnetic bodies of each first magnetic body group may be arbitrarily selected to provide, which is beneficial to improving the air gap magnetic field harmonics, allowing the motor to achieve the optimal electromagnetic performance.

In some embodiments, in one of the plurality of magnetic pole units, the first magnetic bodies between at least two first magnetic body groups have different sizes in the magnetization direction.

In the above solution, the first magnetic bodies of a plurality of first magnetic body groups may have different sizes in the magnetization direction, which is beneficial to improving the air gap magnetic density harmonics, allowing the motor to achieve optimal electromagnetic performance. At the same time, by increasing the sizes of the magnetic bodies, the risk of demagnetization of the magnetic bodies may be reduced.

In some embodiments, an angle between two outermost magnetic bodies of the magnetic pole unit is smaller than a central angle corresponding to the magnetic pole unit in the rotor, which can provide arrangement space of the magnetic conductor for the outermost side of each magnetic pole unit and improve the magnetic field strength of the magnetic pole unit.

In some embodiments, each of the plurality of magnetic pole units has at least one sector-shaped magnetic body, which is beneficial to improving the space utilization of the magnetic body and allowing the motor to achieve optimal electromagnetic performance.

In a non-claimed embodiment, the magnetic bodies are provided in a skewed pole configuration, which is beneficial to reducing the torque pulsation and the reverse electromotive force harmonics of the motor, improving the noise and vibration, and allowing the motor to achieve the optimal electromagnetic performance.

A disc motor is provided according to a second aspect of the present disclosure. The disc motor includes a stator and the rotor according to any one of above embodiments. The stator and the rotor are arranged at intervals in an axial direction of the rotor.

An electric device is provided according to a third aspect of the present disclosure. The electric device includes the disc motor according to above embodiments.

### BRIEF DESCRIPTION OF THE DRAWINGS

In order to clearly illustrate technical solutions of embodiments of the present disclosure, a brief description of drawings used in embodiments of the present disclosure is given below. Obviously, the drawings in the following descriptions are only part embodiments of the present disclosure, and for those skilled in the art, other drawings can be obtained according to these drawings without creative labor.
FIG. 1 is a schematic structural diagram of a rotor provided by a first embodiment of the present disclosure, not belonging to the invention;
FIG. 2 is a top view of a rotor provided by a first embodiment of the present disclosure, not belonging to the invention;
FIG. 3 is a schematic diagram of a magnetic pole unit provided by a first embodiment of the present disclosure, not belonging to the invention;
FIG. 4 is a schematic structural diagram of a rotor provided by a second embodiment of the present disclosure, not belonging to the invention;
FIG. 5 is a top view of a rotor provided by a second embodiment of the present disclosure, not belonging to the invention;
FIG. 6 is a schematic diagram of a magnetic pole unit provided by a second embodiment of the present disclosure, not belonging to the invention;
FIG. 7 is a schematic diagram of a magnetic pole unit provided by a third embodiment of the present disclosure, not belonging to the invention;
FIG. 8 is a schematic diagram of a magnetic pole unit provided by a fourth embodiment of the present disclosure, according to the invention.
FIG. 9 is a schematic diagram of a magnetic pole unit provided by a fifth embodiment of the present disclosure, not belonging to the invention;
FIG. 10 is a schematic diagram of a magnetic pole unit provided by a sixth embodiment of the present disclosure, not belonging to the invention;
FIG. 11 is a top view of a rotor provided by a sixth embodiment of the present disclosure, not belonging to the inventon;
FIG. 12 is a top view of a rotor provided by a seventh embodiment of the present disclosure, not belonging to the invention;
FIG. 13 is a schematic diagram of a magnetic pole unit provided by a seventh embodiment of the present disclosure, not belonging to the invention;
FIG. 14 is a top view of a rotor provided by an eighth embodiment of the present disclosure, not belonging to the invention;
FIG. 15 is a schematic diagram of a magnetic pole unit provided by an eighth embodiment of the present disclosure, not belonging to the invention;
FIG. 16 is a schematic diagram of a simulation of a change in torque of a motor using the rotor of the second embodiment of the present disclosure, not belonging to the invention, and a conventional rotor;
FIG. 17 is a schematic diagram of a simulation of a change in iron consumption performance of a motor using the rotor of the second embodiment of the present disclosure, not belonging to the invention, and a conventional rotor.

### DETAILED DESCRIPTION

Unless otherwise defined, all technical and scientific terms used in the present disclosure have the same meanings as commonly understood by those skilled in the art of the present disclosure. The terms used in the specification of the present disclosure are only for describing specific embodiments and are not intended to limit the present disclosure. The terms "including", "having", and any variations thereof in the specification, claims, and the above description of the drawings of the present disclosure are intended to cover non-exclusive inclusion. The terms "first", "second", etc. in the specification, claims, or the above description of the drawings of the present disclosure are used to distinguish different objects, rather than to describe a specific order or a primary-secondary relationship.

Reference herein to "an embodiment" means that a particular feature, structure or characteristic described in connection with the embodiment can be included in at least one embodiment of the present disclosure. The appearances of this phrase in various places in the specification are not necessarily all referring to the same embodiment, nor are separate or alternative embodiments mutually exclusive of other embodiments.

In the description of the present disclosure, it should be noted that, unless otherwise clearly specified and limited, terms such as "install", "connect", "connect to", and "attach to" should be understood in a broad sense. For example, it may be a fixed connection or a detachable connection or connection as one piece; direct connection or indirect connection through an intermediate or internal connection between two elements. For those of ordinary skill in the art, the specific meaning of the above-mentioned terms in the present disclosure can be understood according to specific circumstances.

The term "and/or" in the present disclosure is merely an association relationship describing related objects, indicating that there may exist three relationships, for example, Aand/or B, which may mean: A exists alone, A and B exist simultaneously, and B exists alone. In addition, the character "/" in the present disclosure generally indicates that the related objects are in an "or" relationship.

In the embodiments of the present disclosure, the same reference numerals represent the same components, and for the sake of simplicity, detailed descriptions of the same components in different embodiments are omitted. It should be understood that the thickness, length, width and other dimensions of various components in the embodiments of the present disclosure shown in the drawings, as well as the overall thickness, length and width of the power device, are only exemplary illustrations and should not constitute any limitation to the present disclosure.

The term " a plurality of" appearing in the present disclosure refers to two or more (including two).

It should be noted that the embodiments and the features in the embodiments in the present disclosure may be combined with each other as long as there is no conflict.

The inventor noticed that a disc motor has gained more and more attention due to its advantages, such as compact structure, high efficiency, large power density, etc. Disc motors are particularly suitable for applications requiring high torque density and compact space, such as electric vehicles, renewable energy systems, flywheel energy storage systems, and industrial devices. After further research, it was found that a rotor for a conventional surface-mounted disc motor has a strong armature reaction of a stator due to a close axial distance between a rotor core and a stator core. As a result, iron loss of the stator under the excitation of AC current is large, and the efficiency of the motors under light-load operating conditions is reduced. However, a rotor of a conventional disc motor with spoke-shaped permanent magnet arrangement has limited magnetization effect, and it is difficult to improve the torque density of the motor.

In view of this, the present disclosure provides a technical solution. In this technical solution, a rotor is divided into a plurality of magnetic pole units in a circumferential direction of the rotor, and each of the plurality of magnetic pole units includes at least two magnetic bodies. The magnetic bodies of each of the plurality of magnetic pole units have a same magnetization direction, and the magnetic bodies of any two adjacent magnetic pole units have opposite magnetization directions. This technical solution increases the layer number of the magnetic bodies in each magnetic pole units and increases the number of magnetic barriers in the magnetic pole units, which is beneficial to reducing an armature reaction and iron loss of the stator, and at the same time improving a magnetization effect of the rotor, ultimately improving the torque density and efficiency of the motor.

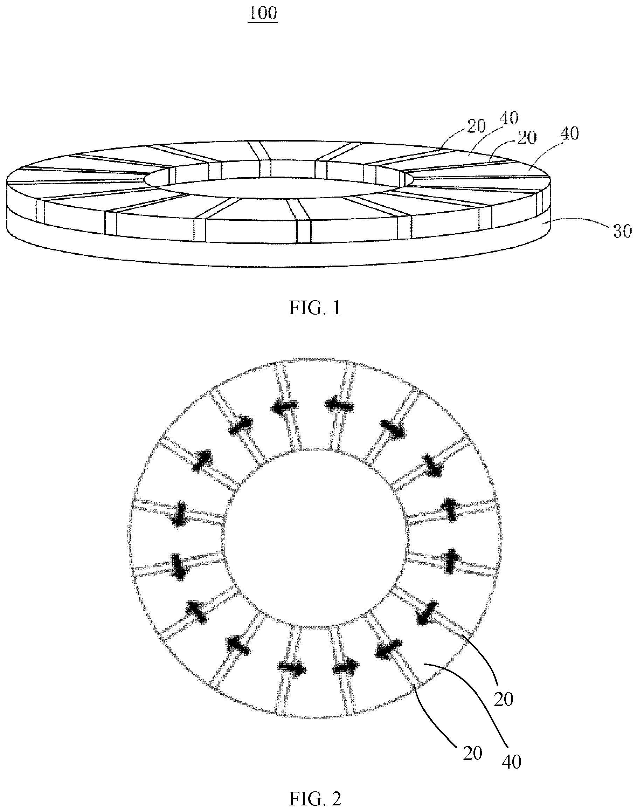

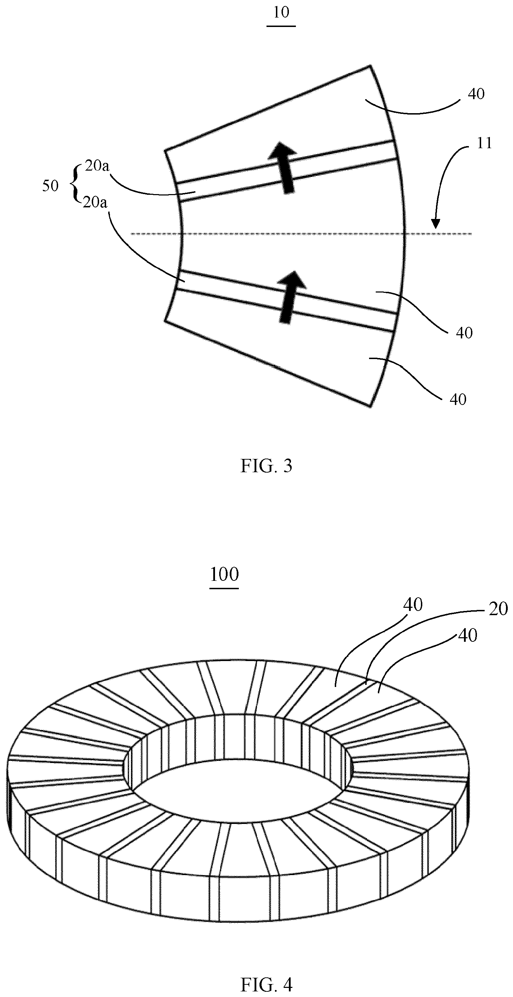

FIG. 1 is a schematic structural diagram of a rotor provided by a first embodiment of the present disclosure; FIG. 2 is a top view of a rotor provided by a first embodiment of the present disclosure; and FIG. 3 is a schematic diagram of a magnetic pole unit provided by a first embodiment of the present disclosure.

Referring to FIG. 1 to FIG. 3, in the first embodiment, a rotor 100 for a disc motor is divided into a plurality of magnetic pole units 10 in a circumferential direction of the rotor 100, and each of the plurality of magnetic pole units 10 includes at least two magnetic bodies 20. The magnetic bodies 20 of each of the plurality of magnetic pole units 10 have a same magnetization direction, and the magnetic bodies 20 of any two adjacent magnetic pole units 10 have opposite magnetization directions.

The magnetic body 20 refers to an object that is originally magnetic or an object that is magnetic after being magnetized. The magnetic body 20 may adopt a soft magnetic material or a hard magnetic material. The magnetic body 20 may generate a magnetic field on its own without applying external current or induction to attract an object consisting of a substance, such as iron, cobalt, nickel, and the like. Exemplarily, the magnetic body may be a permanent magnet, such as natural magnet (magnetite) and artificial magnet steel, which is not easy to lose magnetism and is not easy to be magnetized. Magnetic steel may be synthesized from several harder metals, such as iron with aluminum, nickel, cobalt, etc. The magnetic steel may also be synthesized from copper, niobium, tantalum, etc.

The magnetic material may be magnetized to saturation in the same direction, which is called the magnetization direction or magnetized direction.

In this embodiment, all the magnetic bodies 20 of each of the magnetic pole units 10 have a same magnetization direction, that is, the magnetization direction of the magnetic bodies 20 of one magnetic pole unit 10 are distributed in a circumferential clockwise direction or in a circumferential counterclockwise direction, which increases the number of magnetic bodies 20 in each magnetic pole unit 10. The two adjacent magnetic pole units 10 have opposite magnetization directions. The plurality of magnetic pole units 10 are arranged in a stagger manner in different magnetization directions. For example, each of magnetic bodies 20 of a first magnetic pole unit is magnetized in the circumferential clockwise direction, that is, from N pole to S pole in the clockwise direction N. In this case, each of magnetic bodies 20 of a second magnetic pole unit (the next adjacent magnetic pole unit 10 in the circumferential clockwise direction) is magnetized in the circumferential counterclockwise direction, that is, from N pole to S pole in the counterclockwise direction, thereby generating a constant magnetic field of the rotor 100 with more pole numbers than the number of blocks of the magnetic body 20.

In the above solution, two adjacent magnetic pole units 10 have opposite magnetization directions. Each of the plurality of magnetic pole units 10 includes at least two magnetic bodies 20 having the same magnetization direction. In this way, the layer number of the magnetic bodies 20 in each magnetic pole unit 10 is increased, and the number of magnetic barriers of the magnetic pole units 10 is increased, which is beneficial to reducing an armature reaction and iron loss of the stator, and at the same time improving a magnetization effect of the rotor 100, ultimately improving the torque density and efficiency of the motor.

In some embodiments, the rotor 100 may also include a chassis 30. The magnetic body 20 may be fixed to the chassis 30 by means of bolts, adhesives, or snaps. The center of the chassis 30 have a through hole for passing through a rotation shaft of the rotor 100. The plurality of magnetic bodies 20 are arranged at intervals in the circumferential direction of the chassis 30 around the through hole, forming a plurality of magnetic pole units 10.

Further, in some embodiments, the rotor 100 further includes a plurality of magnetic conductors 40 arranged at intervals in the circumferential direction, one conductor 20 is embedded between any two adjacent magnetic conductors 40.

The magnetic conductor 40, i.e., a rotor core, may be a stacked sheet or a block element made of the magnetic material such as ferrite materials, or may be made of silicon steel sheets stacked, wound, or powder metallurgy die cast.

The rotational torque of the rotor 100 of the disc motor comes from an induced magnetic field force between the stator and the rotor 100. The rotor core and the stator core have the same function, both of them may enhance the strength of the induced magnetic field and the density of magnetic force lines, and thus enhancing the mutual magnetic field torque. Therefore, the magnetic conductor 40 of this embodiment has an effect of conducting magnetism, and can enhance the magnetic field strength and magnetic field torque of the magnetic pole unit 10.

In some embodiments, the magnetic conductor 40 may be fixed to the chassis 30 by means of bolts, adhesives, or snaps. The plurality of magnetic conductors 40 are arranged at intervals around the circumferential direction of the through hole of the chassis 30. The crosssection of the magnetic conductor 40 in a direction parallel to the chassis 30 may be fan-shaped or rectangular. A fixed groove is formed between the two adjacent magnetic conductors 40. The magnetic body 20 is embedded in the fixed groove in a spoke shape in the radial direction of the rotor 100. Each magnetic pole unit 10 is provided with a plurality of layers of spoke-shaped magnetic bodies 20 arranged at intervals. Each magnetic body 20 extends in the radial direction of the rotor 100, and the layer number may be 2 to N, where N is an integer greater than 2.

In exemplary embodiments of the present disclosure, the plurality of magnetic pole units 10 are evenly distributed in the circumferential direction of the rotor 100. The rotor 100 is divided into the plurality of magnetic pole units 10 evenly in the circumferential direction of the rotor 100, allowing the rotor 100 to have a uniform magnetic field distribution, and enhancing the uniformity of the magnetic field strength distribution of the rotor 100.

In exemplary embodiments of the present disclosure, as shown in FIG. 3, each of the plurality of magnetic pole units 10 includes at least one first magnetic body group 50 each including two first magnetic bodies 20a. The two first magnetic bodies 20a are symmetrically distributed along a center line 11 of the magnetic pole unit 10.

The first magnetic body 20a refers to one of the plurality of magnetic bodies 20. In other words, the two magnetic bodies 20 of the first magnetic body group 50 symmetrically distributed in the center line 11 of the magnetic pole unit 10 are referred to as the two first magnetic bodies 20a.

In the case of the two first magnetic bodies 20a having same magnetization direction, byy increasing the number of the magnetic bodies 20 in the magnetic pole units 10, the number of magnetic barriers in the magnetic pole units 10 is increased, which is beneficial to reducing the armature reaction and iron loss of the stator, improving the magnetization effect, and ultimately improving the torque density and efficiency of the motor.

In the above solution, the number of the first magnetic bodies 20a is an even number. It should be noted that in this embodiment, the center line 11 of the magnetic pole unit 10 refers to a central symmetry axis of the magnetic pole units 10, that is, the magnetic pole units 10 are axial symmetry in the center line 11. The first magnetic bodies 20a of the first magnetic body group 50 of each of the magnetic pole units 10 are symmetrically distributed to ensure uniform distribution of the magnetic field strength of the magnetic pole units 10 and to improve the electromagnetic performance of the disc motor.

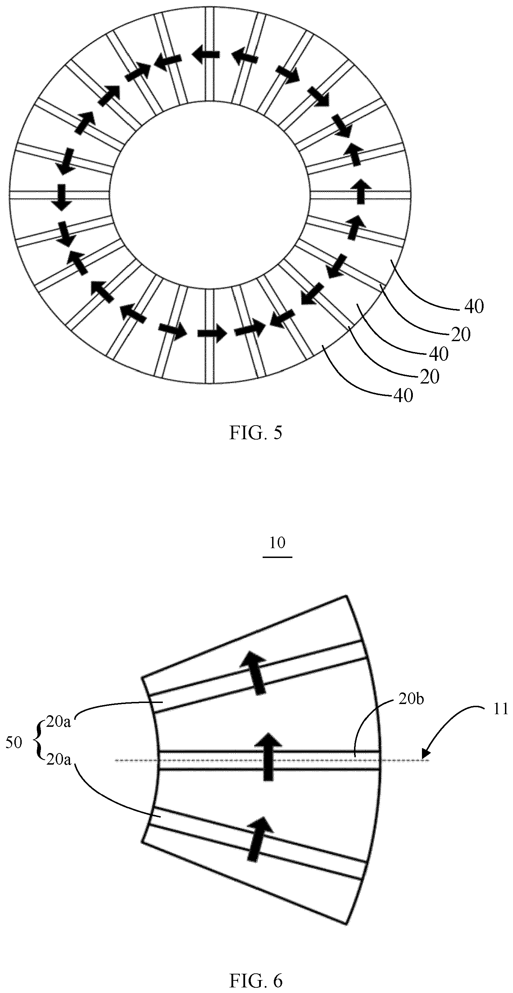

FIG. 4 is a schematic structural diagram of a rotor provided by a second embodiment of the present disclosure; FIG. 5 is a top view of a rotor provided by a second embodiment of the present disclosure; and FIG. 6 is a schematic diagram of a magnetic pole unit provided by a second embodiment of the present disclosure.

Referring to FIG. 4 to FIG. 6, in the second embodiment of the present disclosure, the magnetic pole unit 10 further includes one second magnetic body 20b disposed on the center line 11.

The second magnetic body 20b being disposed on the center line 11 means that the center line 11 passes over the second magnetic body 20b. In another exemplary embodiment of the present disclosure, the second magnetic body 20b is axially symmetrical about the center line 11.

On the basis of the first embodiment, the above solution increases the second magnetic body 20b. Under one magnetic pole unit 10, the first magnetic body 20a and the second magnetic body 20b of the first magnetic body group 50 have a same magnetization direction. The number of the magnetic bodies 20 in the magnetic pole unit 10 is further increased. By increasing the number of the magnetic bodies 20 in the magnetic pole units 10, the number of magnetic barriers in the magnetic pole units 10 is increased, which is more beneficial to reducing the armature reaction and iron loss of the stator, improving the magnetization effect, and ultimately improving the torque density and efficiency of the motor. The second magnetic body 20b is disposed on the center line 11, which may improve the uniformity of the magnetic field strength distribution of the magnetic pole units 10.

In some embodiments, the second magnetic body 20b extends in a radial direction of the rotor 100. The second magnetic body 20b is axially symmetrical about the center line 11. The second magnetic body 20b is located between the two first magnetic bodies 20a. This embodiment may further improve the uniformity of the magnetic field strength distribution of the magnetic pole unit 10.

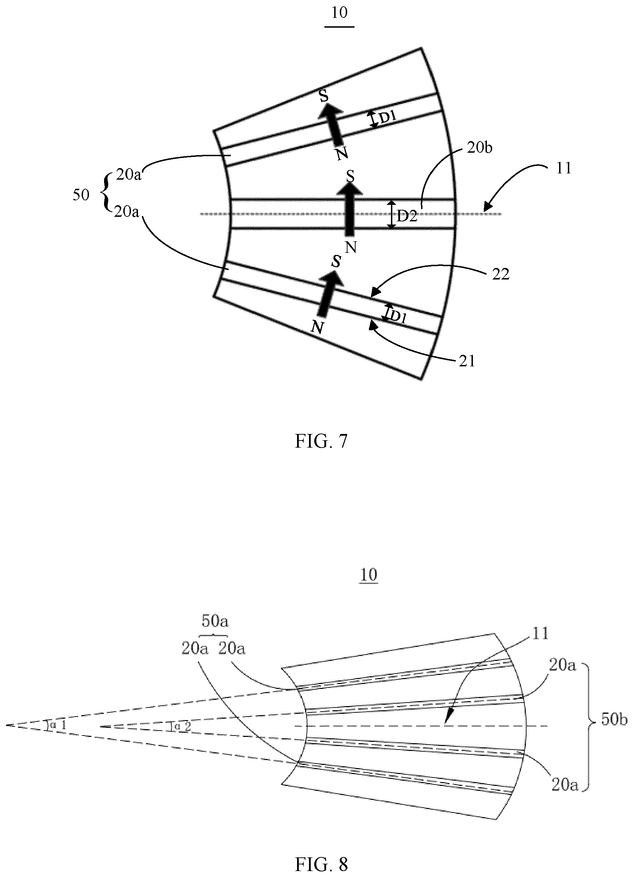

FIG. 7 is a schematic diagram of a magnetic pole unit provided by a third embodiment of the present disclosure. As shown in FIG. 7, in the third embodiment of the present disclosure, the first magnetic body 20a and the second magnetic body 20b have different sizes in the magnetization direction.

The size of the first magnetic body 20a in the magnetization direction, that is, the thickness of the first magnetic body 20a in the magnetization direction, is D1 as shown in FIG. 7. The two first magnetic bodies 20a of the first magnetic body group 50 in the magnetization direction have same thickness. The size of the second magnetic body 20b in the magnetization direction, that is, the second magnetic body 20b, is D2 as shown in FIG. 7. The first magnetic body 20a and the second magnetic body 20b are cuboid. The first magnetic body 20a includes a first surface 21 and a second surface 22 arranged relatively parallel. The N pole is close to the first surface 21 and the S pole is close to the second surface. 22. The first magnetic body 20a is magnetized in the direction from the first surface 21a to the second surface 21b. The size D1 of the first magnetic body 20a in the magnetization direction is the thickness perpendicular to the first surface 21 or the second surface 22. Similarly, the size D2 of the second magnetic body 20b in the magnetization direction is also measured using the same method as the size D1 of the first magnetic body 20a in the magnetization direction.

In the above solution, the first magnetic body 20a and the second magnetic body 20b have different sizes in the magnetization direction. The thickness D2 of the second magnetic body 20b may be greater than the thickness D1 of the first magnetic body 20a, or the thickness D1 of the first magnetic body 20a may be greater than the thickness D2 of the second magnetic body 20b, which is beneficial to improving the air gap magnetic density harmonics, allowing the motor to achieve optimal electromagnetic performance, and at the same time, by increasing the size of the magnetic body 20, a risk of demagnetization of the magnetic body 20 may be reduced.

FIG. 8 is a schematic diagram of a magnetic pole unit provided by a fourth embodiment of the present disclosure, according to the invention. As shown in FIG. 8, in the fourth embodiment of the present disclosure, each of the plurality of magnetic pole units 10 includes a plurality of first magnetic body groups 50a, 50b. In one of the plurality of magnetic pole units 10, two first magnetic bodies 20a of each first magnetic body group 50a, 50b are angled to each other, and an angle formed between two first magnetic bodies 20a of each of the plurality of first magnetic body groups 50a, 50b being different from an angle formed between two first magnetic bodies 20a of another one of the plurality of first magnetic body groups 50a, 50b.

The two first magnetic bodies 20a of each of the first magnetic body group 50a, 50b are symmetrically distributed at an angle along the center line 11 of the magnetic pole unit 10. Each magnetic pole unit 10 has M magnetic bodies 20, and if M is an even number greater than 1, the magnetic pole unit 10 has M/2 first magnetic body groups 50a, 50b; if M is an odd number greater than 1, the magnetic pole unit 10 has (M-1)/2 first magnetic body groups 50a, 50b. The first magnetic bodies 20a of the plurality of first magnetic body groups 50a, 50b are all distributed in a circumferential clockwise direction or in a circumferential counterclockwise direction. The magnetic bodies 20 of the adjacent magnetic pole units 10 have opposite magnetization directions. On the basis of the first embodiment, the fourth embodiment further increases the number of magnetic barriers of the magnetic pole unit 10, which is more beneficial to reducing the armature reaction and iron consumption of the stator. At the same time, by providing a greater number of magnetic bodies 20, the torque density and efficiency of the motor are improved.

The angle formed between the two magnetic bodies 20 may be the angle formed by the center lines of the two magnetic bodies 20. Exemplarily, the center line of the magnetic body 20 extends in the radial direction of the rotor.

For example, each magnetic pole unit 10 has four first magnetic bodies 20a arranged in the circumferential counterclockwise direction, which are a first layer of first magnetic body 20a, a second layer of first magnetic body 20a, a third layer of first magnetic body 20a, and a fourth layer of first magnetic body 20a, respectively. The first layer of first magnetic body 20a and the fourth layer of first magnetic body 20a form one first magnetic body group 50a, and the second layer of first magnetic body 20a and the third layer of first magnetic body 20a form another first magnetic body group 50b. The angle α1 between the first layer of first magnetic body 20a and the fourth layer of first magnetic body 20a is greater than the angle α2 between the second layer of first magnetic body 20a and the third layer of first magnetic body 20a. The angle α1 between the first layer of first magnetic body 20a and the fourth layer of first magnetic body 20a, and the angle α2 between the second layer of first magnetic body 20a and the third layer of first magnetic body 20a may be selected at an any angle.

In the solution of the fourth embodiment, the two first magnetic bodies 20a of each first magnetic body group 50a, 50b are angled to each other. The angle formed between the two first magnetic bodies 20a of each first magnetic body group 50a, 50b may be arbitrarily selected to provide, which is beneficial to improving the air gap magnetic field harmonics, allowing the motor to achieve the optimal electromagnetic performance.

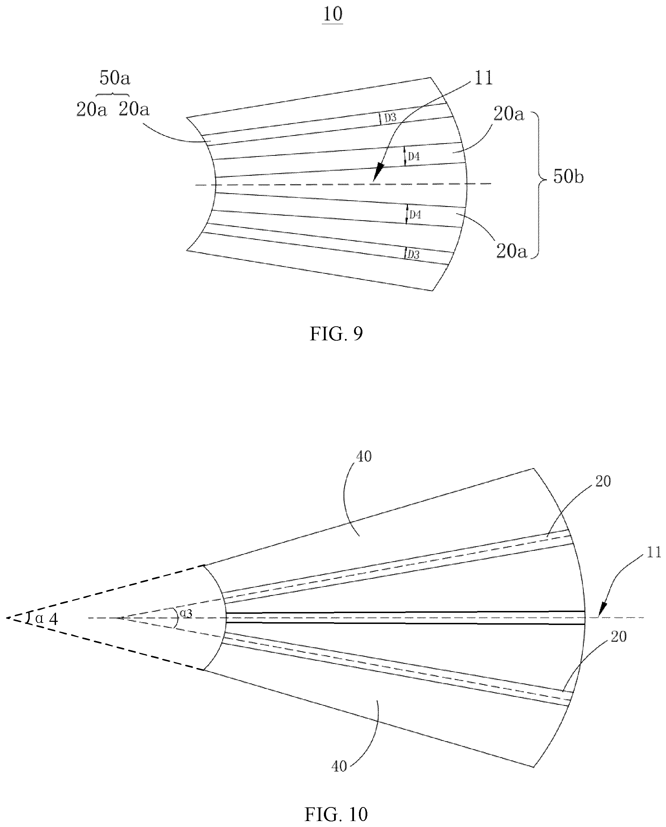

FIG. 9 is a schematic diagram of a magnetic pole unit provided by a fifth embodiment of the present disclosure. Further, as shown in FIG. 9, in the fifth embodiment, in one of the plurality of magnetic pole units 10, the first magnetic bodies 20a of at least two first magnetic body groups 50a, 50b have different sizes in the magnetization direction.

Exemplarily, the first magnetic body 20a is a cuboid, and the thicknesses of the first magnetic bodies 20a of different first magnetic body groups 50a, 50b in the magnetization direction may be different. For example, a first layer of first magnetic body 20a and a fourth layer of first magnetic body 20a form one first magnetic body group 50a, and the size of the first magnetic bodies 20a of the first magnetic body group 50a in the magnetization direction is D3. The second layer of first magnetic body 20a and the third layer of first magnetic body 20a form another first magnetic body group 50b., and the size of the first magnetic body 20a of the first magnetic body group 50b in the magnetization direction is D4, where D4 may be greater than D3. D3 and D4 are measured in the same method as the size D1 of the first magnetic body 20a in the magnetization direction. The measurement method of the size D1 of the first magnetic body 20a in the magnetization direction has been explained above. Therefore, the measurement method of D3 and D4 will not be described in detail here.

In the above solution, the first magnetic bodies 20a of a plurality of first magnetic body groups 50a, 50b may have different sizes in the magnetization direction, which is beneficial to improving the air gap magnetic density harmonics, and allowing the motor to achieve optimal electromagnetic performance. At the same time, by increasing the sizes of the first magnetic bodies 20a, the risk of demagnetization of the first magnetic bodies 20a may be reduced.

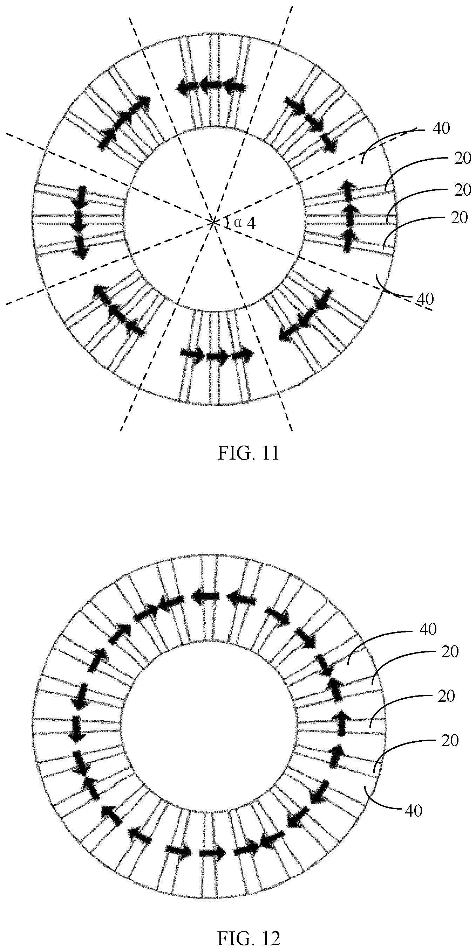

FIG. 10 is a schematic diagram of a magnetic pole unit provided by a sixth embodiment of the present disclosure; and FIG. 11 is a top view of a rotor provided by a sixth embodiment of the present disclosure. As shown in FIG. 10 and FIG. 11, an angle α3 between two outermost magnetic bodies 20 of the magnetic pole unit 10 is smaller than a central angle α4 corresponding to the magnetic pole unit 10 in the rotor 100.

The central angle α4 may be an angle between two end surfaces of the magnetic pole unit 10 in the circumferential direction. Exemplarily, the rotor 100 is equally divided into K magnetic pole units 10 in the circumferential direction of the rotor 100, and the central angle α4 of each of the magnetic pole units 10 is 360°/K. For example, in FIG. 11, the rotor 100 is equally divided into eight parts, corresponding to eight magnetic pole units 10, and each of the magnetic pole units has an angle α4 = 360°/8 = 45° in the rotor.

The outermost magnetic bodies 20 of two adjacent magnetic pole units 10 are arranged at intervals, which can provide setting space for the magnetic conductor 40. That is, one magnetic conductor 40 may be shared between two adjacent magnetic pole units 10, ensuring that the outermost side of each of the magnetic pole units 10 has a magnetic conductor 40, and improving the magnetic field strength of the magnetic pole units 10.

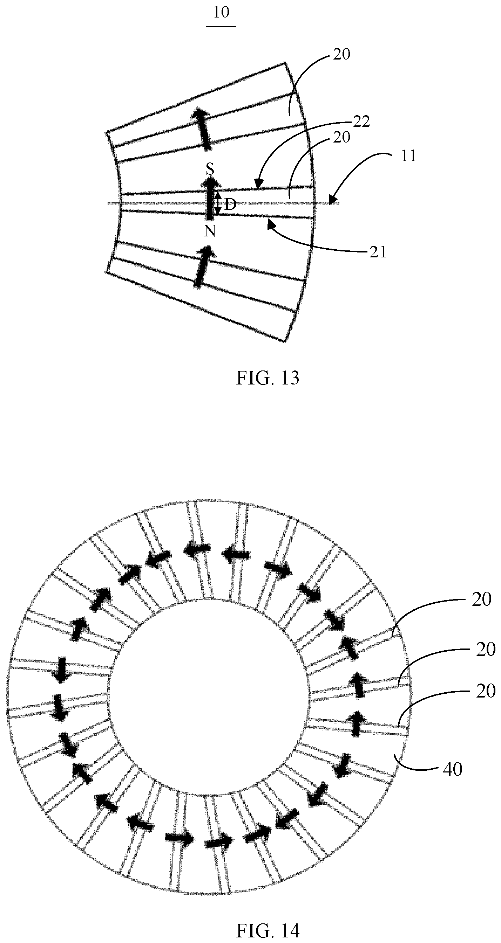

FIG. 12 is a top view of a rotor provided by a seventh embodiment of the present disclosure; and FIG. 13 is a schematic diagram of a magnetic pole unit provided by a seventh embodiment of the present disclosure.

Referring to FIG. 12 and FIG. 13, in the seventh embodiment of the present disclosure, each of the plurality of magnetic pole units 10 has at least one sector-shaped magnetic body 20. The magnetic body 20 is sector-shaped in a direction parallel to the chassis 30. The radius of the sector-shaped magnetic body 20 gradually increases in a direction away from the rotor 100. All the magnetic bodies 20 of the rotor 100 may be arranged in sector-shaped, or only one or a few of the magnetic bodies 20 may be arranged in sector-shaped, and the specific number is not limited.

Exemplarily, for a sector-shaped magnetic body 20, the size D of the magnetic body 20 in the magnetization direction is calculated at the center of the magnetic body 20 in the radial direction of the rotor. For example, the magnetic body 20 includes a first surface 21 and a second surface 22 oppositely arranged. The first surface 21 is close to the N pole, and the second surface 22 is close to the S pole. When calculating the size D as shown in FIG. 13, measure in a direction from the N pole to the S pole at the center point of the magnetic body 20 in the radial direction of the rotor.

In the solution of the seventh embodiment, each of the plurality of magnetic pole units 10 has at least one sector-shaped magnetic body 20, which is beneficial to improving the space utilization of the magnetic body 20 and allowing the motor to achieve optimal electromagnetic performance.

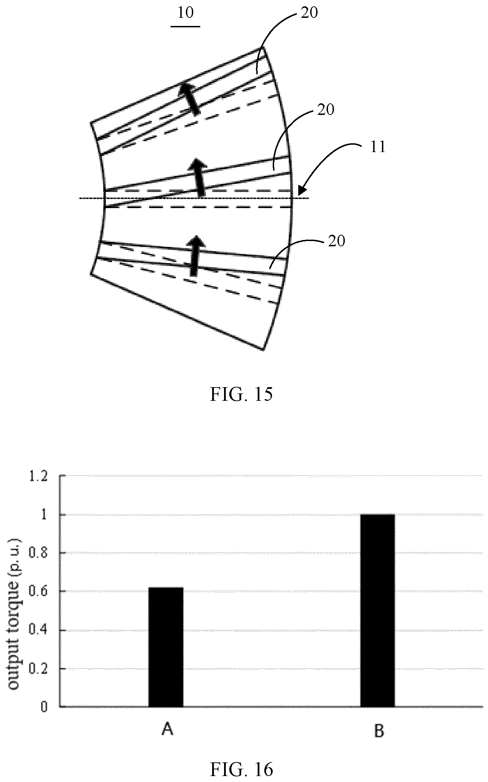

FIG. 14 is a top view of a rotor provided by an eighth embodiment of the present disclosure; and FIG. 15 is a schematic diagram of a magnetic pole unit provided by an eighth embodiment of the present disclosure. Referring to FIG. 14 and FIG. 15, in the eighth embodiment of the present disclosure, the magnetic bodies 20 are provided in a skewed pole configuration, that is, the extending direction of the magnetic body 20 is arranged at an angle with the radial direction of the rotor 100, which is beneficial to reducing the torque pulsation and the reverse electromotive force harmonics of the motor, improving the noise and vibration, and allowing the motor to achieve the optimal electromagnetic performance.

It should be noted that if the magnetic body 20 provided in a skewed pole configuration is cuboid, the measurement method of the size of the magnetic body 20 in the magnetic field direction is the same as the measurement method of the size D1 of the first magnetic body 20a in the magnetization direction in the third embodiment. If the magnetic body 20 provided in a skewed pole configuration is sector-shaped, the measurement method of the size of the magnetic body 20 in the magnetic field direction is the same as the measurement method of the size D of the magnetic body 20 in the magnetization direction of the seventh embodiment.

A disc motor is provided according to the embodiments in a second aspect of the present disclosure. The disc motor includes a stator and the rotor 100 according to any one of above embodiments. The stator and the rotor 100 are arranged at intervals in an axial direction of the rotor 100. Since the disc motor adopts all the technical solutions of all the above embodiments, the disc motor has at least all the beneficial effects brought by the technical solutions of the above embodiments, which will not be described again one by one.

FIG. 16 is a schematic diagram of a simulation of a change in torque of a motor using the rotor of the second embodiment of the present disclosure and a conventional rotor, with A in the horizontal coordinate of FIG. 16 representing the conventional rotor and B representing the rotor of the second embodiment. As can be seen from FIG. 16, the motor using the rotor of the second embodiment of the present disclosure has an improved magnetization effect and a weaken armature reaction, and the output torque of the motor may be increased by 61%.

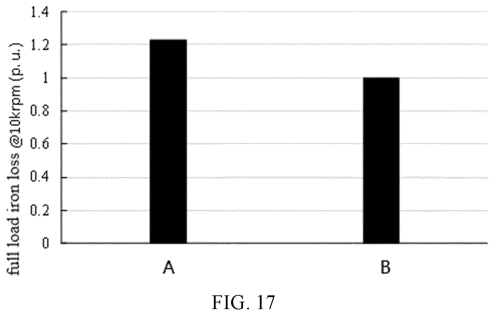

FIG. 17 is a schematic diagram of a simulation of a change in iron consumption performance of a motor using the rotor of the second embodiment of the present disclosure and a conventional rotor, with A in the horizontal coordinate of FIG. 17 representing the conventional rotor and B representing the rotor of the second embodiment. As can be seen from FIG. 17, the 10krpm full load iron loss of the motor using the rotor of the second embodiment of the present disclosure is reduced by 19%.

An embodiment in a third aspect of the present disclosure provides an electric device. The electric device includes the above disc motor. The electric device may be, but is not limited to, a battery car, an electric car, a ship, a spacecraft, and the like. The spacecraft may include airplanes, rockets, space shuttles, spacecraft, and the like.

According to some embodiments of the present disclosure, the present disclosure provides a rotor 100 for a disc motor. The rotor 100 is divided into a plurality of magnetic pole units 10 in a circumferential direction of the rotor 100, and each of the plurality of magnetic pole units 10 includes at least two magnetic bodies 20. The magnetic bodies 20 of each of the plurality of magnetic pole units 10 have a same magnetization direction, and the magnetic bodies 20 of any two adjacent magnetic pole units 10 have opposite magnetization directions. The rotor 100 further includes a plurality of magnetic conductors 40 arranged at intervals in the circumferential direction, and one conductor 20 is embedded between any two adjacent magnetic conductors 40. The magnetic conductor 40 has an effect of conducting magnetism, and may enhance the magnetic field strength of the magnetic pole unit 10. The plurality of magnetic pole units 10 are evenly distributed in the circumferential direction of the chassis 30, enhancing the uniformity of the magnetic field strength distribution of the rotor 100. Each of the plurality of magnetic pole units 10 includes a first magnetic body group 50a, 50b each including two first magnetic bodies 20a. The two first magnetic bodies 20a are symmetrically distributed along a center line 11 of the magnetic pole unit 10.

Finally, it should be noted that the above embodiments are only used to illustrate the technical solutions of the present disclosure, rather than to limit them. Although the present disclosure has been described in detail with reference to the foregoing embodiments, those of ordinary skill in the art should understand that modifications may still be made to the technical solutions described in the foregoing embodiments, or equivalent substitutions may be made to part of the technical features. However, these modifications or substitutions do not cause the essence of the corresponding technical solutions to depart from the scope of the technical solutions in the embodiments of the present disclosure. The scope of protection is defined by the appended claims.

## Claims

1. A rotor (100) for a disc motor, the rotor (100) being divided into a plurality of magnetic pole units (10) in a circumferential direction of the rotor (100), and each of the plurality of magnetic pole units (10) comprising at least two magnetic bodies (20),
wherein in the circumferential direction of the rotor (100), the magnetic bodies (20) of each of the plurality of magnetic pole units (10) have a same magnetization direction and the magnetic bodies (20) of any two adjacent magnetic pole units (10) have opposite magnetization directions in the circumferential direction of the rotor (100),
wherein each of the plurality of magnetic pole units (10) comprises at least one first magnetic body group (50) each comprising two first magnetic bodies (20a), the two first magnetic bodies (20a) being symmetrically distributed along a center line of the magnetic pole unit (10),
wherein each of the plurality of magnetic pole units (10) comprises a plurality of first magnetic body groups (50); and wherein in one of the plurality of magnetic pole units (10), two first magnetic bodies (20a) of each first magnetic body group (50) are angled to each other, an angle formed between two first magnetic bodies (20a) of each of the plurality of first magnetic body groups (50) being different from an angle formed between two first magnetic bodies (20a) of another one of the plurality of first magnetic body groups (50).

2. The rotor (100) according to claim 1, wherein the rotor (100) further comprises a plurality of magnetic conductors (40) arranged at intervals in the circumferential direction, and wherein any two adjacent magnetic conductors (40) have one said magnetic body (20) embedded between the two adjacent magnetic conductors (40).

3. The rotor (100) according to claim 1 or 2, wherein the plurality of magnetic pole units (10) is evenly distributed in the circumferential direction of the rotor (100).

4. The rotor (100) of the disk motor according to any of claims 1-3, wherein each of the plurality of the magnetic pole units (10) further comprise one second magnetic body (20b) disposed on the center line (11).

5. The rotor (100) according to claim 4, wherein the first magnetic bodies (20a) and the second magnetic body (20b) have different sizes in the magnetization direction.

6. The rotor (100) according to any of claims 1-5, wherein in one of the plurality of magnetic pole units (10), the first magnetic bodies (20a) between at least two first magnetic body groups (50) have different sizes in the magnetization direction.

7. The rotor (100) according to any one of claims 1 to 6, wherein an angle between two outermost magnetic bodies (20) of the magnetic pole unit (10) is smaller than a central angle (α4) corresponding to the magnetic pole unit (10) in the rotor (100).

8. The rotor (100) according to any one of claims 1 to 7, wherein each of the plurality of magnetic pole units (10) has at least one sector-shaped magnetic body.

9. A disc motor, comprising a stator and the rotor (100) according to any one of claims 1 to 8, the stator and the rotor (100) being arranged at intervals in an axial direction of the rotor (100).

10. An electric device, comprising the disc motor according to claim 9.

## Patentansprüche

1. Rotor (100) für einen Scheibenankermotor, wobei der Rotor (100) in einer Umfangsrichtung des Rotors (100) in mehrere Magnetpoleinheiten (10) aufgeteilt ist und wobei z wobei die Magnetkörper (20)jeder der mehreren Magnetpoleinheiten (10) in der Umfangsrichtung des Rotors (100) dieselbe Magnetisierungsrichtung aufweisen und die Magnetkörper (20) zweier beliebiger benachbarter Magnetpoleinheiten (10) in Umfangsrichtung des Rotors (100) entgegengesetzte Magnetisierungsrichtungen aufweisen,
wobei jede der mehreren Magnetpoleinheiten (10) wenigstens eine erste Magnetkörpergruppe (50), die jeweils zwei erste Magnetkörper (20a) umfasst, enthält, wobei die zwei ersten Magnetkörper (20a) entlang einer Mittellinie der Magnetpoleinheit (10) symmetrisch verteilt sind,
wobei jede der mehreren Magnetpoleinheiten (10) mehrere erste Magnetkörpergruppen (50) enthält; und wobei in einer der mehreren Magnetpoleinheiten (10) zwei erste Magnetkörper (20a) jeder ersten Magnetkörpergruppe (50) zueinander angewinkelt sind, wobei ein zwischen zwei ersten Magnetkörpern (20a) jeder der mehreren ersten Magnetkörpergruppen (50) gebildeter Winkel von einem zwischen zwei ersten Magnetkörpern (20a) einer anderen der mehreren ersten Magnetkörpergruppen (50) gebildeten Winkel verschieden ist.

2. Rotor (100) nach Anspruch 1, wobei der Rotor (100) ferner mehrere magnetische Leiter (40), die in Umfangsrichtung in Abständen angeordnet sind, umfasst und wobei zwei beliebige benachbarte magnetische Leiter (40) einen der Magnetkörper (20) zwischen den zwei benachbarten magnetischen Leitern (40) eingebettet haben.

3. Rotor (100) nach Anspruch 1 oder 2, wobei die mehreren Magnetpoleinheiten (10) in Umfangsrichtung des Rotors (100) gleichmäßig verteilt sind.

4. Rotor (100) des Scheibenankermotors nach einem der Ansprüche 1-3, wobei jede der mehreren Magnetpoleinheiten (10) ferner einen zweiten Magnetkörper (20b), der auf der Mittellinie (11) angeordnet ist, umfasst.

5. Rotor (100) nach Anspruch 4, wobei die ersten Magnetkörper (20a) und die zweiten Magnetkörper (20b) in der Magnetisierungsrichtung unterschiedliche Größen aufweisen.

6. Rotor (100) nach einem der Ansprüche 1-5, wobei die ersten Magnetkörper (20a) zwischen wenigstens zwei ersten Magnetkörpergruppen (50) in einer der mehreren Magnetpoleinheiten (10) in der Magnetisierungsrichtung unterschiedliche Größen aufweisen.

7. Rotor (100) nach einem der Ansprüche 1 bis 6, wobei ein Winkel zwischen zwei äußersten Magnetkörpern (20) der Magnetpoleinheit (10) kleiner ist als ein Zentriwinkel (α4), der der Magnetpoleinheit (10) in dem Rotor (100) entspricht.

8. Rotor (100) nach einem der Ansprüche 1 bis 7, wobei jede der mehreren Magnetpoleinheiten (10) wenigstens einen sektorförmigen Magnetkörper aufweist.

9. Scheibenankermotor, der einen Stator und den Rotor (100) nach einem der Ansprüche 1 bis 8 umfasst, wobei der Stator und der Rotor (100) in Axialrichtung des Rotors (100) in Abständen angeordnet sind.

10. Elektrische Vorrichtung, die den Scheibenankermotor nach Anspruch 9 enthält.

## Revendications

1. Rotor (100) pour un moteur à disque, le rotor (100) étant divisé en une pluralité d'unités polaires magnétiques (10) dans une direction circonférentielle du rotor (100), et chacune de la pluralité d'unités polaires magnétiques (10) comprenant au moins deux corps magnétiques (20),
dans lequel, dans la direction circonférentielle du rotor (100), les corps magnétiques (20) de chacune de la pluralité d'unités polaires magnétiques (10) présentent une même direction de magnétisation et les corps magnétiques (20) de deux unités polaires magnétiques (10) adjacentes quelconques présentent des directions de magnétisation opposées dans la direction circonférentielle du rotor (100),
dans lequel chacune de la pluralité d'unités polaires magnétiques (10) comprend au moins un premier groupe (50) de corps magnétiques comprenant chacun deux premiers corps magnétiques (20a), les deux premiers corps magnétiques (20a) étant répartis de manière symétrique le long d'une ligne médiane de l'unité polaire magnétique (10),
dans lequel chacune de la pluralité d'unités polaires magnétiques (10) comprend une pluralité de premiers groupes (50) de corps magnétiques ; et dans lequel, dans l'une de la pluralité d'unités polaires magnétiques (10), deux premiers corps magnétiques (20a) de chaque premier groupe (50) de corps magnétiques forment un angle l'un avec l'autre, un angle formé entre deux premiers corps magnétiques (20a) de chacun de la pluralité de premiers groupes (50) de corps magnétiques étant différent d'un angle formé entre deux premiers corps magnétiques (20a) d'un autre de la pluralité de premiers groupes (50) de corps magnétiques.

2. Rotor (100) selon la revendication 1, dans lequel le rotor (100) comprend en outre une pluralité de conducteurs magnétiques (40) agencés à intervalles dans la direction circonférentielle, et deux conducteurs magnétiques (40) adjacents quelconques présentent un dit corps magnétique (20) logé entre les deux conducteurs magnétiques (40) adjacents.

3. Rotor (100) selon la revendication 1 ou 2, dans lequel la pluralité d'unités polaires magnétiques (10) est répartie de manière uniforme dans la direction circonférentielle du rotor (100).

4. Rotor (100) du moteur à disque selon l'une quelconque des revendications 1 à 3, dans lequel chacune de la pluralité d'unités polaires magnétiques (10) comprend en outre un deuxième corps magnétique (20b) disposé sur la ligne médiane (11).

5. Rotor (100) selon la revendication 4, dans lequel les premiers corps magnétiques (20a) et le deuxième corps magnétique (20b) présentent des tailles différentes dans la direction de magnétisation.

6. Rotor (100) selon l'une quelconque des revendications 1 à 5, dans lequel, dans l'une de la pluralité d'unités polaires magnétiques (10), les premiers corps magnétiques (20a) entre au moins deux premiers groupes (50) de corps magnétiques présentent des tailles différentes dans la direction de magnétisation.

7. Rotor (100) selon l'une quelconque des revendications 1 à 6, dans lequel un angle entre deux corps magnétiques (20) les plus externes de l'unité polaire magnétique (10) est inférieur à un angle central (α4) correspondant à l'unité polaire magnétique (10) dans le rotor (100).

8. Rotor (100) selon l'une quelconque des revendications 1 à 7, dans lequel chacune de la pluralité d'unités polaires magnétiques (10) présente au moins un corps magnétique en forme de secteur.

9. Moteur à disque, comprenant un stator et le rotor (100) selon l'une quelconque des revendications 1 à 8, le stator et le rotor (100) étant agencés à intervalles dans une direction axiale du rotor (100).

10. Dispositif électrique, comprenant le moteur à disque selon la revendication 9.
